# EUROPEAN PATENT APPLICATION

(11) **EP 4 475 317 A1**
(43) Date of publication of application: **11.12.2024**
(21) Application number: 24162187.9
(22) Date of filing: 07.03.2024
(51) Int. Cl.: H01M 50/403, H01M 50/446, H01M 10/0525

(54) **MODIFIED GEL ELECTROLYTE SEPARATOR, AND PREPARATION METHOD AND USE THEREOF**

(30) Priority: 30.05.2023 CN 202310624304
(71) Applicant: Cangzhou Zhongfu New Energy Materials Co., Ltd., Cangzhou City, Hebei 061000 (CN)
(72) Inventor: Zhang, Guofeng, Hebei, 061000 (CN); Zhang, Guochong, Hebei, 061000 (CN); Zhang, Guofu, Hebei, 061000 (CN)
(74) Representative: Rauch, Udo

(57) **Abstract**

Disclosed are a modified gel electrolyte separator, and a preparation method and use thereof, belonging to the technical field of novel battery separator materials. The modified gel electrolyte separator is prepared through impregnation in a modifying slurry including: in weight fraction, a nano functional material: 2% to 12%; a high polymer: 2‰ to 1%; a dispersant: 5%o to 2%; a binder: 5%o to 3%; and an organic solvent: 85% to 97%, wherein the nano functional material is silica; the high polymer is polyethylene oxide; the dispersant is a modified high block copolymer; the binder is an acrylic binder with N-methyl-2-pyrrolidone as a solvent; and the organic solvent is dichloromethane. The modified gel electrolyte separator shows high-temperature heat resistance, flame retardancy, and high ductility, as well as significantly improved mechanical and electrochemical properties, and exhibits broad application prospects in the preparation of lithium-ion batteries.

## Description

### TECHNICAL FIELD

The present disclosure belongs to the technical field of novel battery separator materials, and in particular relates to a modified gel electrolyte separator, and a preparation method and use thereof.

### BACKGROUND

With the continuous development of the global economy and the continuous improvement of people's living standards, energy and environmental issues have become increasingly prominent. As a carrier of energy storage, secondary lithium-ion batteries have been widely used in many fields such as mobile phones, digital portable products, and electric vehicles due to high energy density, long cycle life, small self-discharge effect, and environmental friendliness. As an important component of lithium-ion batteries, electrolytes play an important role in conducting lithium ions in the battery. However, highly-flammable carbonate organic solvents are generally adopted in the electrolyte of current commercial lithium-ion batteries, which have risks of leakage and combustion, thus leading to huge safety hazards in lithium-ion batteries. For example, accidents occur frequently involving burning and catching fire in mobile phones and electric vehicles. Researchers have developed gel polymer electrolytes to avoid electrolyte leakage.

Gel polymer electrolyte is a novel functional polymer material between all-solid polymer electrolytes and liquid electrolytes. Such a material can take the replace of oxides and sulfides with stable electrochemical properties, and can be used for lithium-ion batteries in the form of separators and electrolyte materials. However, existing gel polymer electrolytes have poor room-temperature conductivity. In order to improve the room-temperature conductivity, inorganic fillers need to be added into the gel polymer electrolyte to form a composite electrolyte system. The inorganic fillers can be divided into two categories: inert fillers and active fillers. Common inert fillers include Al₂O₃, SiO₂, or TiO₂, which do not directly participate in the ion transport but increase the number of free Li⁺ and promote the rapid transport of Li⁺, thereby improving ionic conductivity. The active fillers refer to inorganic solid electrolytes, which could directly participate in ion transport and provide a lithium source, thereby further improving the ionic conductivity.

The common inert fillers including Al₂O₃, SiO₂, and TiO₂ as well as the active fillers are added and blended, to suppresse the crystallinity of gel electrolysis, thereby increasing the ionic conductivity and ionic transference number of the gel electrolyte. However, the reduction in crystallinity causes the gel electrolyte separator to become brittle, resulting in poor mechanical properties and bringing in difficulty during production.

### SUMMARY

In order to solve the above technical problems, the present disclosure provides a modified gel electrolyte separator, and a preparation method and use thereof. In the present disclosure, the modified gel electrolyte separator is prepared through impregnation in a modifying slurry including, in weight fraction, a nano functional material: 2% to 12%; a high polymer: 2‰ to 1%; a dispersant: 5‰ to 2%; a binder: 5‰ to 3%; and an organic solvent: 85% to 97%, wherein the nano functional material is silica; the high polymer is polyethylene oxide (PEO); the dispersant is a modified high block copolymer; the binder is an acrylic binder with N-methyl-2-pyrrolidone (NMP) as a solvent; and the organic solvent is dichloromethane (DCM). The modified gel electrolyte separator shows high-temperature heat resistance, flame retardancy, and high ductility, as well as significantly improved mechanical and electrochemical properties, and thus exhibits broad application prospects in the preparation of lithium-ion batteries.

To achieve the above objectives, the present disclosure adopts the following technical solutions.

The present disclosure provides a modified gel electrolyte separator, which is prepared through impregnation in a modifying slurry including: in weight fraction,

| | |
|---|---|
| a nano functional material: | 2% to 12%; |
| a high polymer: | 2‰ to 1%; |
| a dispersant: | 5‰ to 2%; |
| a binder: | 5‰ to 3%; and |
| an organic solvent: | 85% to 97%, wherein |

the nano functional material is silica; the high polymer is PEO; the dispersant is a modified high block copolymer; the binder is an acrylic binder; and the organic solvent is DCM.

In some embodiments, the silica as an inert filler has a particle size of 20 nm to 600 nm. Silica of different particle sizes can be selected as a filler in conjunction with commercial lithium battery systems. In some embodiments, nano-scale silica accounts for 2% to 12% of a solid content of the total mass.

The high polymer PEO is used as a binder and thickener. PEO could complex with many lithium salts and provides a desirable solubility of lithium salts. Moreover, the PEO shows high lithium ionic conductivity and small interface resistance with electrode materials at temperatures above its melting point (65 °C). Therefore, the PEO could be used as a substrate for liquid-free solid electrolytes to increase lithium ionic conductivity and reduce interfacial resistance. However, PEO has high crystallinity, low ionic conductivity, and poor mechanical strength at room temperature. Certain modifications to PEO are required to improve ionic conductivity, mechanical strength, as well as enhancing temperature resistance and broadening electrochemical window. In the present disclosure, the PEO accounts for 2‰ to 1% of the total mass.

The dispersant adopts a modified high block copolymer material with no volatile liquid, such that the inert filler is evenly distributed in liquids without precipitation or agglomeration, making the slurry stable. The dosage of dispersant is determined according to the solid content of silica. In the gel electrolyte system, the dispersant accounts for 5‰ to 2% of the total mass.

The binder is mainly an acrylic binder. This type of binder has high-temperature resistance and electrochemical window, and could improve the temperature resistance and electrochemical window of PEO when being mixed with the polymer PEO. However, since it contains NMP solvent, the acrylic binder should not be added in a large amount into the modifying slurry for a gel electrolyte separator. Excessive addition may dissolve the gel polymer matrix and increase the resistance of battery system. Moreover, the excessive addition could also affect the ionic transference number and conductivity of the gel polymer electrolyte. Accordingly, this type of binder accounts for 5‰ to 3% of the total mass.

DCM should be selected as the organic solvent since the gel polymer electrolyte separator exhibits less swelling in DCM, and DCM is non-flammable and non-swelling. The DCM accounts for 85% to 97% of the total mass of the entire system.

The present disclosure further provides a modifying slurry for preparing the modified gel electrolyte separator, including: in weight fraction,

| | |
|---|---|
| the nano functional material: | 2% to 12%; |
| the high polymer: | 2‰ to 1%; |
| the dispersant: | 5‰ to 2%; |
| the binder: | 5‰ to 3%; and |
| the organic solvent: | 85% to 97%, wherein |

the nano functional material is silica; the high polymer is PEO; the dispersant is the modified high block copolymer; the binder is the acrylic binder; and the organic solvent is DCM.

The present disclosure further provides a method for preparing the modified gel electrolyte separator, including the following steps:
(1) adding the nano functional material, the dispersant, and 75% to 90% of the organic solvent according to formulation into a stirring tank, and stirring for at least 30 min, to obtain a slurry 1;
(2) adding the high polymer, the binder, and a remaining organic solvent according to the formulation into a stirring tank, and stirring for at least 30 min, to obtain a slurry 2;
(3) adding the slurry 1 and the slurry 2 into a stirring tank, stirring for at least 10 min, and subjecting a resulting mixture to stirring and grinding by simultaneously operating the stirring tank and a ball mill, and cooling a resulting slurry to a temperature of 15 °C to 30 °C, to obtain the modifying slurry; and
(4) impregnating a gel electrolyte separator in the modifying slurry, conducting ultrasonic treatment to evenly distribute the modifying slurry in pores and on a surface of the gel electrolyte separator, and drying, to obtain the modified gel electrolyte separator.

In some embodiments, the stirring tank is operated at a main stirring speed of 50 r/min to 200 r/min, a shear stirring speed of not less than 500 r/min, and a stirring temperature of 5 °C to 45 °C.

In some embodiments, wherein the stirring tank is operated at a stirring temperature of 20 °C to 45 °C.

In some embodiments, the ball mill is operated at a temperature of 20 °C to 40 °C and a ball milling speed of not less than 1,500 r/min.

In some embodiments, step (3) is performed to ensure full cycle in the ball mill at least 5 times.

In some embodiments, after the stirring and grinding, the resulting slurry is cooled to a temperature of 15 °C to 25 °C.

In some embodiments, the drying in step (4) is conducted at a temperature of 20 °C to 120 °C.

The present disclosure further provides use of the modified gel electrolyte separator, the modifying slurry, and/or the modified gel electrolyte separator prepared by the method as described above in preparation of a battery.

Compared with the prior art, embodiments of the present disclosure have the following beneficial effects:
In the present disclosure, nano-scale silica has greater temperature resistance, higher specific surface area, and electrochemical window, and could inhibit the crystallinity of the gel electrolyte and increase the liquid absorption rate of the gel polymer electrolyte. Meanwhile, nano-scale particles could also effectively block the migration of anions and increase the transference number of lithium ions, thereby improving the electrochemical performance, and the mechanical properties of the gel electrolyte. However, the introduction of binder is required. It is well known in the art that the introduction of any binder would inevitably increase the resistance of the battery, so it is necessary to reduce the resistance of the binder at this time. The advantage of PEO is that PEO could complex with many lithium salts, and provides desirable solubility of lithium salts, and a lithium ionic conductivity could be effectively improved after introducing PEO into the electrolyte. However, PEO is easy to crystallize, shows poor temperature resistance, and has a low electrochemical window, making it difficult to apply to high-energy-density battery systems, so the PEO needs to be modified. Silica could inhibit the crystallinity of PEO, improve the temperature resistance of PEO, and increase the electrochemical window of PEO, but PEO should not be added excessively in this system. At this time, an acrylic binder with higher resistance is introduced. After the acrylic binder is mixed with the PEO, the electrochemical properties and temperature resistance of PEO itself are improved, meanwhile the resistance of the acrylic binder is also effectively improved. These two materials not only have a certain binding force as binders, but also further effectively improve the effect of reducing resistance. DCM has less swelling to the gel polymer electrolyte separator in this system, keeping the pore size of the gel electrolyte separator from becoming smaller due to swelling. As a result, the silica could fill the pores in a large amount, which endows the gel polymer electrolyte separator with a certain temperature resistance, increases mechanical properties, and also improves electrochemical performance. In summary, the modified gel electrolyte separator prepared by the method according to the present disclosure shows high-temperature heat resistance, flame retardancy, and high ductility, as well as significantly improved mechanical and electrochemical properties, and thus exhibits broad application prospects in the preparation of lithium-ion batteries.

### BRIEF DESCRIPTION OF THE DRAWINGS

FIG. 1 to FIG. 3 show electron microscope scanning images of a cross section of the gel electrolyte separator before modification in Example 4 of the present disclosure.
FIG. 4 to FIG. 5 show electron microscope scanning images of a cross section of the gel electrolyte separator after modification in Example 4 of the present disclosure.
FIG. 6 to FIG. 7 show test results of the mechanical strength of the modified gel electrolyte separator in Example 5 of the present disclosure.
FIG. 8 shows test results of the ionic conductivity of the modified gel electrolyte separator in Example 5 of the present disclosure.
FIG. 9 shows test results of the ionic transference number of the modified gel electrolyte separator in Example 5 of the present disclosure.
FIG. 10 shows detection results of the compressive strength and deformation rate of the modified gel electrolyte separator in Example 5 of the present disclosure.

### DETAILED DESCRIPTION OF THE EMBODIMENTS

The following examples are intended to illustrate the present disclosure, but not to limit the scope of the present disclosure. Modifications or substitutions made to methods, steps or conditions of the present disclosure without departing from the spirit and essence of the present disclosure fall within the scope of the present disclosure.

The technical solutions of the present disclosure will be further described in detail below in conjunction with examples.

In the present disclosure, the silica was purchased from Hubei Hifull Nanomaterial Co., Ltd. China, with a specification of HB-151; the dispersant used was Walker VOR-Disperse9900; the DCM has a purity of not less than 99.9%; the binder used was Zeon BM-520B, Japan, purchased from Shanghai Zeon, China; the PEO was purchased from Shanghai Gobekie Co., Ltd., China, with a molecular weight of one million.

### Example 1

1 kg of silica (with a particle size of 40 nm to 60 nm), 0.1 kg of a dispersant, and 13 kg of DCM were added into a double planetary stirrer, and stirred at a main stirring speed of 66 r/min, a shearing disk dispersion speed of 4,000 r/min, and a stirring temperature of 40 °C for 60 min to obtain a slurry 1.

0.3 kg of a binder, 0.1 kg of PEO, and 2 kg of DCM were added into a double planetary stirrer, and stirred at a main stirring speed of 66 r/min, a shearing disk dispersion speed of 4,000 r/min, and a stirring temperature of 40 °C for 60 min to obtain a slurry 2.

The above two slurries were mixed in a double planetary stirrer, and stirred at a main stirring speed of 66 r/min, a shearing disk dispersion speed (i.e., shear stirring speed) of 4,000 r/min, and a stirring temperature of 40 °C for 30 min. The resulting mixture was stirred and ground simultaneously by simultaneously operating the double planetary stirrer and a ball mill for 60 min, and then a resulting slurry was cooled to 20 °C to obtain a modifying slurry.

The modifying slurry was poured into a gel tank, a gel electrolyte separator casting sheet was impregnated in the modifying slurry, and ultrasonic treatment was conducted to evenly distribute the modifying slurry in pores and on a surface of the gel polymer electrolyte separator. The gel electrolyte separator after impregnation was dried by setting the following conditions in a host equipment: a linear speed of 5 m/min, an oven temperature of 80 °C, an air blast frequency of 20 Hz, and an air exhaust frequency of 25 Hz, to obtain a modified gel electrolyte separator.

### Example 2

0.5 kg of silica (with a particle size of 40 nm to 60 nm), 0.1 kg of a dispersant, and 13 kg of DCM were added into a double planetary stirrer, and stirred at a main stirring speed of 66 r/min, a shearing disk dispersion speed of 4,000 r/min, and a stirring temperature of 40 °C for 60 min to obtain a slurry 1.

0.2 kg of a binder, 0.05kg of PEO, and 2 kg of DCM were added into a double planetary stirrer, and stirred at a main stirring speed of 66 r/min, a shearing disk dispersion speed of 4,000 r/min, and a stirring temperature of 40 °C for 60 min to obtain a slurry 2.

The above two slurries were mixed in a double planetary stirrer, and stirred at a main stirring speed of 66 r/min, a shearing disk dispersion speed of 4,000 r/min, and a stirring temperature of 40 °C for 30 min. The resulting mixture was stirred and ground simultaneously by simultaneously operating the double planetary stirrer and a ball mill for 60 min, and then a resulting slurry was cooled to 20 °C to obtain a modifying slurry.

The modifying slurry was poured into a gel tank, a gel electrolyte separator casting sheet was impregnated in the modifying slurry, and ultrasonic treatment was conducted to evenly distribute the modifying slurry in pores and on a surface of the gel polymer electrolyte separator. The gel electrolyte separator after impregnation was dried by setting the following conditions in a host equipment: a linear speed of 5 m/min, an oven temperature of 80 °C, an air blast frequency of 20 Hz, and an air exhaust frequency of 25 Hz, to obtain a modified gel electrolyte separator.

### Example 3

0.61 kg of silica (with a particle size of 40 nm to 60 nm), 0.12 kg of a dispersant, and 35 kg of DCM were added into a double planetary stirrer, and stirred at a main stirring speed of 66 r/min, a shearing disk dispersion speed of 4,000 r/min, and a stirring temperature of 40 °C for 60 min to obtain a slurry 1.

0.37 kg of a binder, 0.041 kg of PEO, and 10 kg of DCM were added into a double planetary stirrer, and stirred at a main stirring speed of 66 r/min, a shearing disk dispersion speed of 4,000 r/min, and a stirring temperature of 40 °C for 60 min to obtain a slurry 2.

The above two slurries were mixed in a double planetary stirrer, and stirred at a main stirring speed of 66 r/min, a shearing disk dispersion speed of 4,000 r/min, and a stirring temperature of 40 °C for 30 min. The resulting mixture was stirred and ground simultaneously by simultaneously operating the double planetary stirrer and a ball mill for 60 min, and then a resulting slurry was cooled to 20 °C to obtain a modifying slurry.

The modifying slurry was poured into a gel tank, a gel electrolyte separator casting sheet was impregnated in the modifying slurry, and ultrasonic treatment was conducted to evenly distribute the modifying slurry in pores and on a surface of the gel polymer electrolyte separator. The gel electrolyte separator after impregnation was dried by setting the following conditions in a host equipment: a linear speed of 5 m/min, an oven temperature of 80 °C, an air blast frequency of 20 Hz, and an air exhaust frequency of 25 Hz, to obtain a modified gel electrolyte separator.

### Example 4

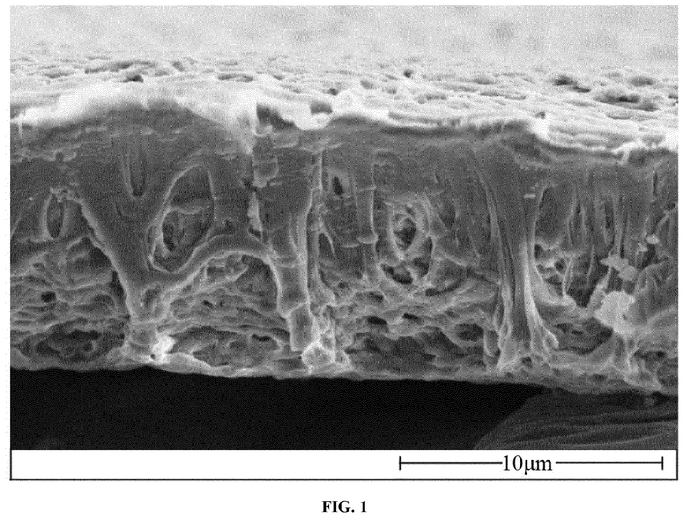

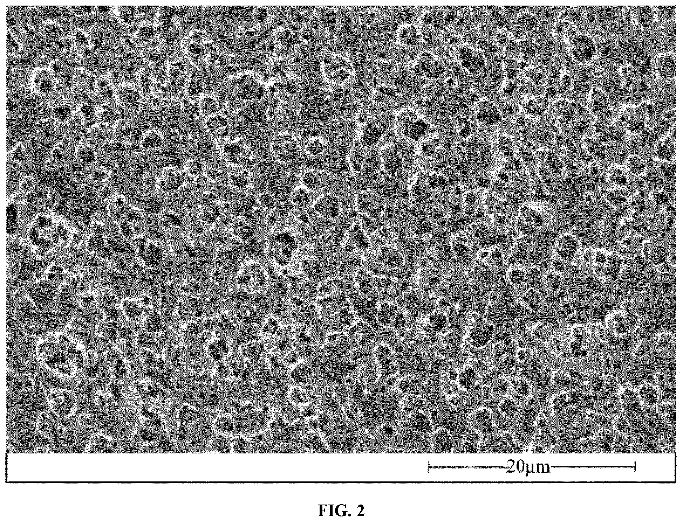

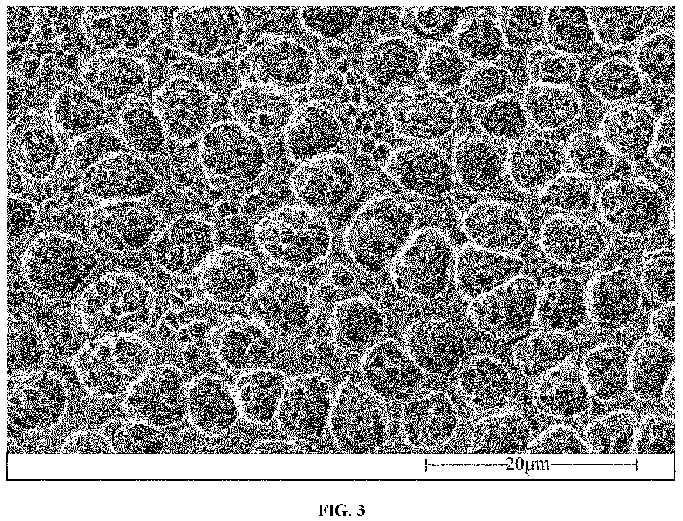

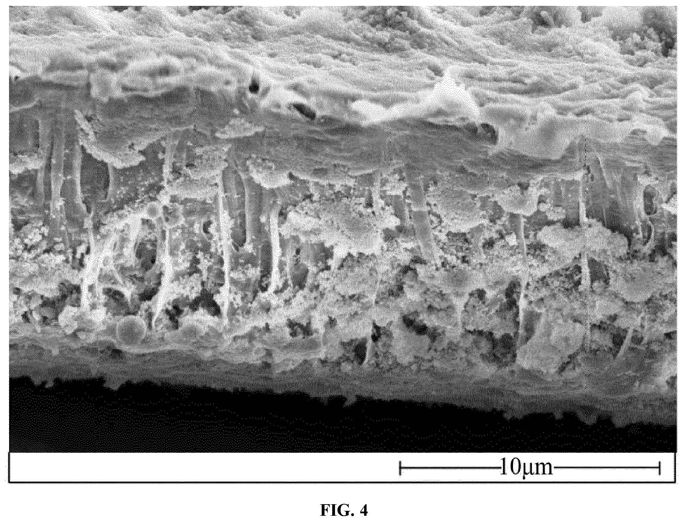

A cross section of the gel electrolyte separator sample before and after modification in Example 3 was observed separately using an electron microscope. The scanning results are shown in FIG. 1 to FIG. 5.

The results show that the gel electrolyte separator before modification has a pore diameter of 3 µm to 5 µm and a pore depth of 8 µm to 9 µm. The gel electrolyte separator is softened after heating and pressurization, and pore structure in the gel electrolyte collapses during this process. At this time, the cell shorts out, conductivity, and ionic transference number are all affected to varying degrees, reducing the electrochemical and mechanical properties of the gel electrolyte separator. The pores of the modified gel electrolyte separator in this disclosure were filled with nanomaterial silica, which could effectively solve the problems of gel electrolyte, such as electrochemical properties not meeting requirements for commercial use, for example, ionic conductivity, ionic transference number, as well as low heat resistance, and poor elongation.

### Example 5

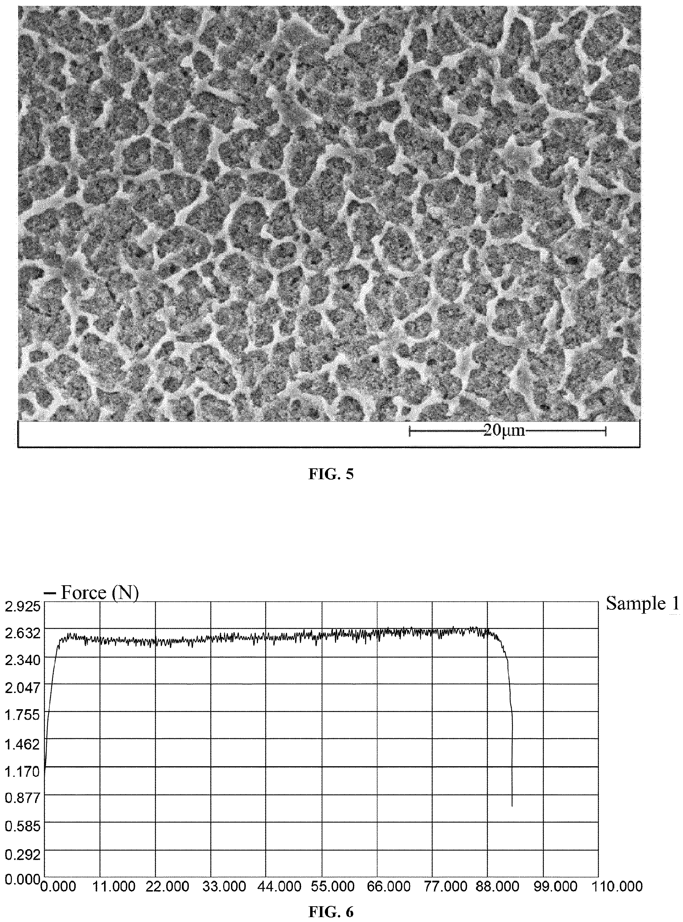

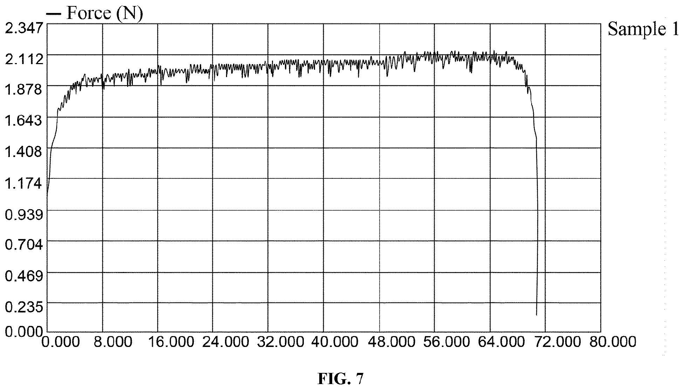

1. MD/TD tensile mechanical properties of the modified gel electrolyte separator in Example 3 were tested using a universal tensile machine. The results are shown in Table 1 and FIG. 6 to FIG. 7.

**Table 1 MD/TD tensile mechanical properties of modified gel electrolyte separator**

| Example | | Maximum force (N) | Minimum force (N) | Average force (N) | Displacement (mm) | Tensile strength (kgf/cm²) | Strain (%) |
|---|---|---|---|---|---|---|---|
| Example 3 | Stretch in MD direction | 2.659 | 0.755 | 2.533 | 92.832 | 139.041 | 92.8% |
| | Stretch in TD direction | 2.134 | 0.131 | 1.994 | 70.765 | 111.576 | 70.8% |

The results show that the modified gel electrolyte separator produced by the method according to the present disclosure has excellent mechanical properties.

2. The modified gel electrolyte separator in Example 3 was heat-shrunk in a hot oven to detect the MD/TD tensile mechanical properties of the modified gel electrolyte separator before and after heat shrinkage. The results are shown in Table 2.

**Table 2 MD/TD direction of modified gel electrolyte separator before and after heat shrinkage**

| Before heat shrinking (mm) 130 °C | | After heat shrinking (mm) 130 °C/1 h | | Shrinkage percentage | Shrinkage percentage |
|---|---|---|---|---|---|
| TD | MD | TD | MD | TD | MD |
| 100 | 100 | 98.5 | 98 | 1.5% | 2% |
| Before heat shrinking (mm) 150 °C | | After heat shrinking (mm) 150 °C/1 h | | Shrinkage percentage | Shrinkage percentage |
| TD | MD | TD | MD | TD | MD |
| 100 | 100 | 96.5 | 95.5 | 3.5% | 4% |

The results indicate that the gel electrolyte separator has excellent heat resistance after being impregnated in the modifying slurry, and shows less shrinkage in high-temperature environments.

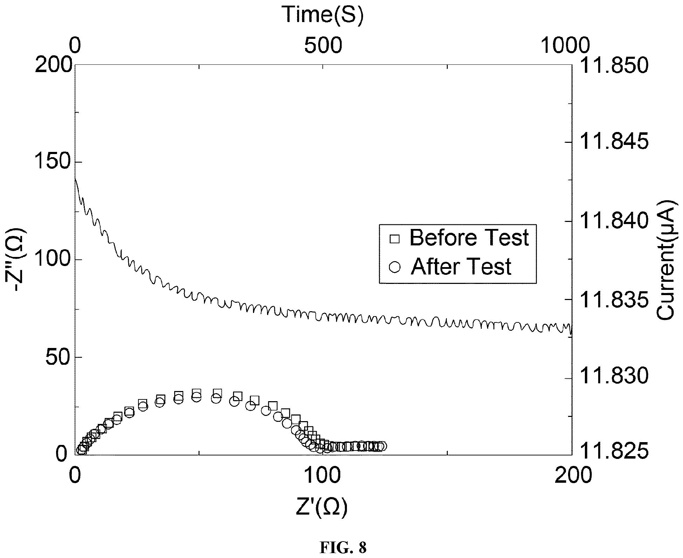

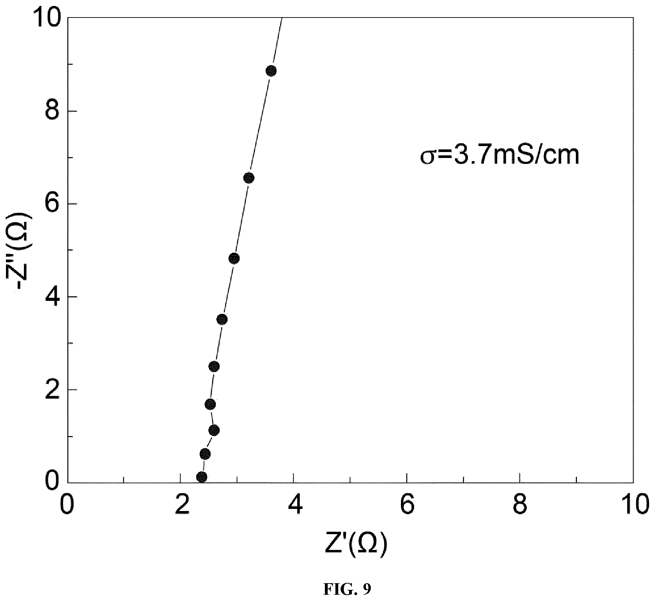

3. The ionic transference number and ionic conductivity of the modified gel electrolyte separator in Example 3 are measured using an impedance test instrument and a chronoamperometer instrument, respectively. The test results are shown in Table 3 and FIG. 8 to FIG. 9.

**Table 3 ionic transference number and ionic conductivity of the modified gel electrolyte separator**

| | Method | Tested value |
|---|---|---|
| Ionic conductivity | Calculation of ionic conductivity: | 3.7×10⁻³ Scm⁻¹ |
| | A stainless steel symmetrical battery was assembled to test the impedance at a frequency: 100 KHz to 10 MHz. | |
| | Calculation was performed using a formula σ=L/R_{b}·A, where σ represents ionic conductivity, L represents film thickness, R_{b} represents resistance value, and A represents electrode area. | |
| ionic transference number | Calculation of ionic transference number: | 0.99 |
| | A lithium symmetrical battery was assembled, the impedance before polarization was determined at frequency: 100 KHz to 10 MHz, a steady-state current was determined by chronoamperometry, ΔV=10 mV, time=1,000 s, and then the impedance after polarization was determined. | |
| | The ionic transference number was calculated using a formula t^+=Is (ΔV-I₀R₀)/I₀ (ΔV-I_{S}R_{S}), where t^+ represents the ionic transference number, Iₛ represents the steady-state current, I₀ represented an initial current, Rₛ represents the impedance after polarization, and R₀ represents the impedance before polarization. | |

The results show that the gel polymer electrolyte separator has smaller resistance and higher ionic transference number after modification.

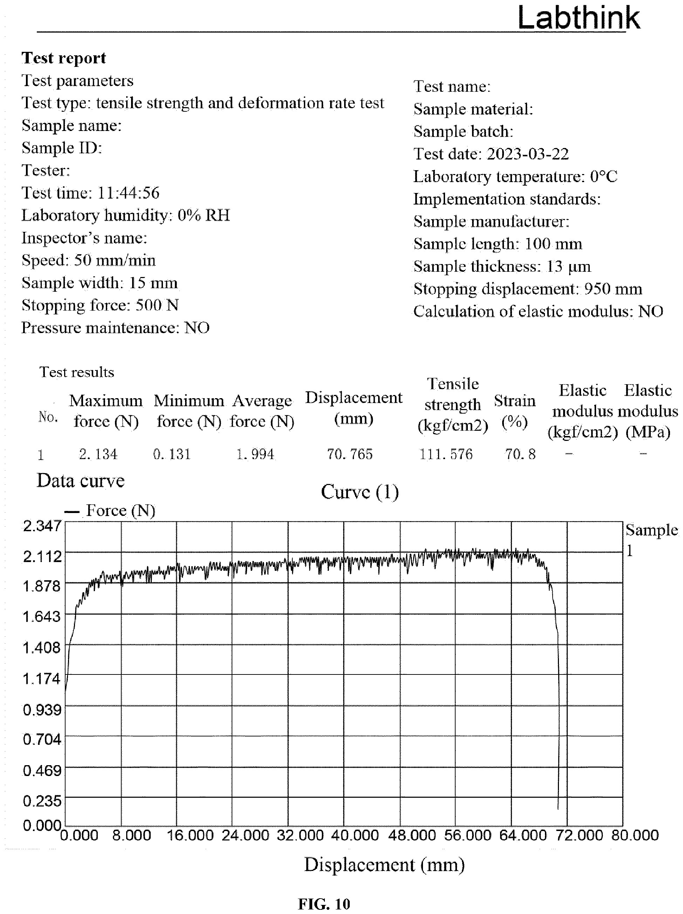

4. The compressive strength and deformation rate of the modified gel electrolyte separator in Example 3 were tested. The test results are shown in FIG. 10.

The results show that the modified gel electrolyte separator produced by the method according to the present disclosure indeed has excellent mechanical properties and electrochemical properties.

The above examples are only intended to describe the preferred embodiments of the present disclosure, but not to limit the scope of the present disclosure. Various variants and improvements made by those of ordinary skill in the art based on the technical solution of the present disclosure without departing from the design spirit of the present disclosure shall fall within the scope of the appended claims of the present disclosure.

## Claims

1. A modified gel electrolyte separator, which is prepared through impregnation in a modifying slurry comprising, in weight fraction,
| | |
|---|---|
| a nano functional material: | 2% to 12%; |
| a high polymer: | 2‰ to 1%; |
| a dispersant: | 5‰ to 2%; |
| a binder: | 5‰ to 3%; and |
| an organic solvent: | 85% to 97%, wherein |
| the nano functional material is silica; | |
| the high polymer is polyethylene oxide; | |
| the dispersant is a modified high block copolymer; | |
| the binder is an acrylic binder; and | |
| the organic solvent is dichloromethane. | |

2. A modifying slurry for preparing the modified gel electrolyte separator as claimed in claim 1, comprising, in weight fraction,
| | |
|---|---|
| the nano functional material: | 2% to 12%; |
| the high polymer: | 2‰ to 1%; |
| the dispersant: | 5‰ to 2%; |
| the binder: | 5%o to 3%; and |
| the organic solvent: | 85% to 97%, wherein |
| the nano functional material is silica; | |
| the high polymer is polyethylene oxide; | |
| the dispersant is the modified high block copolymer; | |
| the binder is the acrylic binder; and | |
| the organic solvent is dichloromethane. | |

3. A method for preparing the modified gel electrolyte separator as claimed in claim 1, comprising the steps of
(1) adding the nano functional material, the dispersant, and 75% to 90% of the organic solvent according to formulation into a stirring tank, and stirring for at least 30 min, to obtain a slurry 1;
(2) adding the high polymer, the binder, and a remaining organic solvent according to the formulation into a stirring tank, and stirring for at least 30 min, to obtain a slurry 2;
(3) adding the slurry 1 and the slurry 2 into a stirring tank, stirring for at least 10 min, and subjecting a resulting mixture to stirring and grinding by simultaneously operating the stirring tank and a ball mill, and cooling a resulting slurry to a temperature of 15 °C to 30 °C, to obtain the modifying slurry; and
(4) impregnating a gel electrolyte separator in the modifying slurry, conducting ultrasonic treatment to evenly distribute the modifying slurry in pores and on a surface of the gel electrolyte separator, and drying, to obtain the modified gel electrolyte separator.

4. The method as claimed in claim 3, wherein the stirring tank in step (3) is operated at a main stirring speed of 50 r/min to 200 r/min, a shear stirring speed of not less than 500 r/min, and a stirring temperature of 5 °C to 45 °C.

5. The method as claimed in claim 4, wherein the stirring tank in step (3) is operated at a stirring temperature of 20 °C to 45 °C.

6. The method as claimed in claim 5, wherein the ball mill is operated at a temperature of 20 °C to 40 °C and a ball milling speed of not less than 1,500 r/min.

7. The method as claimed in claim 6, wherein step (3) is performed to ensure full cycle in the ball mill at least 5 times.

8. The method as claimed in claim 7, wherein after the stirring and grinding, the resulting slurry is cooled to a temperature of 15 °C to 25 °C.

9. The method as claimed in claim 8, wherein the drying in step (4) is conducted at a temperature of 20 °C to 120 °C.

10. Use of the modified gel electrolyte separator as claimed in claim 1, the modifying slurry as claimed in claim 2, and/or the modified gel electrolyte separator prepared by the method as claimed in any one of claims 3 to 9 in preparation of a battery.
